# EUROPÄISCHE PATENTSCHRIFT

(11) **EP 1 403 147 B1**
(45) Veröffentlichungstag und Bekanntmachung des Hinweises auf die Patenterteilung: **29.03.2006**
(21) Anmeldenummer: 03018668.8
(22) Anmeldetag: 21.08.2003
(51) Int. Cl.: B60R 21/20, B60R 21/26

(54) **Baugruppe aus Gasgenerator und Generatorträger**
Assembly of gas generator and generator holder
Ensemble composé d'un générateur de gaz et un support de générateur

(30) Priorität: 27.09.2002 DE 20214954 U
(43) Veröffentlichungstag der Anmeldung: 31.03.2004
(73) Patentinhaber: TRW Automotive Safety Systems GmbH, 63743 Aschaffenburg (DE)
(72) Erfinder: Keutz, Markus, 64380 Rossdorf (DE); Helmstetter, Matthias, 63743 Aschaffenburg (DE)
(74) Vertreter: Kitzhofer, Thomas

(56) Entgegenhaltungen:
- US-A- 5 547 213
- US-A- 5 615 907
- US-B1- 6 431 582

## Beschreibung

Die Erfindung betrifft eine Baugruppe gemäß dem Oberbegriff des Anspruchs 1.

Die Befestigung des Gasgenerators an einem Generatorträger bzw. an einem Gassackmodul muß zum einen hohen Kräften sicher widerstehen können, sollte zum anderen aber auch einfach zu bewerkstelligen sein, um Arbeitszeit und Kosten gering zu halten. Je geringer die Zahl der einzelnen Bauteile ist, desto einfacher lassen sich diese Ziele erreichen.

Die gattungsgemäße US-A- 5 547 213 zeigt eine Möglichkeit, einen Gasgenerator mit einem Träger zu verbinden. Der Träger besteht aus einem Metallring mit einer Umfangswand, die den Gasgenerator umgibt. Der Gasgenerator hat einen wulstförmigen umlaufenden Flansch. Nachdem der Gasgenerator in den Träger eingesetzt wurde, werden ausgeschnittene Laschen in der Umfangswand umgebogen, deren Ränder am Flansch angreifen und den Gasgenerator fixieren.

Die Erfindung ermöglicht eine schnelle und sichere Befestigung eines Gasgenerators.

Dies wird bei einer oben beschriebenen Baugruppe dadurch die Merkmale des Anspruchs 1 erreicht.

Längsseiten des Klemmfortsatzes im wesentlichen in Umfangsrichtung angeordnet sind, erfolgt eine Belastung des Klemmfortsatzes durch eine Krafteinwirkung in Richtung einer Mittelachse der Baugruppe, d.h. senkrecht zu der durch die Umfangsrichtung definierten Ebene, also nicht in Verformungsrichtung des Klemmfortsatzes, sondern senkrecht dazu. Hierdurch kann der Klemmfortsatz eine sehr hohe Kraft aufnehmen, ohne sich zu verbiegen. Auch gegen eine Verbiegung durch während der Lebensdauer des Gasgenerators auftretende Fahrzeugschwingungen ist der Klemmfortsatz relativ unempfindlich.

Vorzugsweise sind mehrere Klemmfortsätze vorgesehen.

Der Klemmfortsatz ist durch zwei im wesentlichen zueinander parallel verlaufende, sich in Umfangsrichtung erstrekkende Schlitze begrenzt. Diese Anordnung macht die Fertigung der Klemmfortsätze sehr einfach. Es müssen lediglich die entsprechenden Schlitze in den Wandabschnitten des Generatorträgers ausgebildet und die Klemmfortsätze radial nach innen, d.h. in Richtung der Mittelachse des Generatorträgers bzw. des darin eingesetzten Gasgenerators gebogen werden.

Durch den Abstand der parallelen Schlitze bestimmt sich die Ausdehnung der Klemmfortsätze in Axialrichtung und darüber deren Biegesteifigkeit parallel zur Mittelachse des Generatorträgers. Die Klemmfortsätze sind aus dem Material der Wandabschnitte selbst gebildet. In Radialrichtung werden die Klemmfortsätze nach dem Einsetzen des Gasgenerators in den Generatorträger nicht belastet.

Die Zahl der Klemmfortsätze kann je nach Anforderung und Gestaltung des Gassackmoduls gewählt werden, bevorzugt sind jedoch mindestens drei Klemmfortsätze vorgesehen.

Die Umfangswand des Generatorträgers bildet vorzugsweise einen umfangsmäßig geschlossenen zylindrischen Ring und setzt sich in Umfangsrichtung aus abwechselnden ersten Wandabschnitten mit Klemmfortsätzen und zweiten Wandabschnitten ohne Klemmfortsätze zusammen. Bei dieser Gestaltung bilden die Klemmfortsätze bevorzugt streifenförmige Abschnitte der Umfangswand, deren gegenüberliegende Schmalseiten einstückig in die zweiten Wandabschnitte übergehen.

In diesem Fall ist der Abschnitt der Umfangswand, der nach der seitlichen Verformung den streifenförmigen Abschnitt bildet, radial nach innen ausgebuchtet, aber in Bezug auf die Achse des Generatorträgers nicht verkippt. Da sichdie streifenförmigen Abschnitte parallel zur Mittelachse des Generatorträgers erstrekken, weisen sie in dieser Richtung eine hohe Biegesteifigkeit auf.

Die aus den Wandabschnitten gebildete Umfangswand umgibt den eingesetzten Gasgenerator. Je nach Ausbildung der Baugruppe kann die Umfangswand kreiszylindrisch sein oder eine andere geeignete Form aufweisen.

Um dem Generatorträger eine hohe Stabilität zu verleihen, weisen die ersten Wandabschnitte bevorzugt von den Klemmfortsätzen separate Brücken auf, die jeweils zwei nebeneinander liegende zweite Wandabschnitte verbinden, so daß der obere Rand der Umfangswand einen geschlossenen Ring bildet. Die Brücken ergeben sich automatisch, wenn die Klemmfortsätze durch zwei übereinander liegende, parallele, in Umfangsrichtung angeordnete Schlitze gebildet sind.

In einer bevorzugten Ausführungsform der Erfindung weist der Generatorträger einen radialen Flansch auf, auf dem der Flansch des Gasgenerators im montierten Zustand der Baugruppe aufliegt. Dieser radiale Flansch kann noch durch einen Sickenzug verstärkt sein. Eine derartige Gestaltung ermöglicht eine hohe Kraftaufnahme durch den Generatorträger. Diese Ausführung ist besonders vorteilhaft, wenn der Flansch den Gasgenerator umfangsmäßig vollständig umgibt, wobei bevorzugt der Flansch des Gasgenerators vollflächig in Umfangsrichtung durchgehend auf dem Flansch des Generatorträgers aufliegt, da sich so außerdem auf einfache Art eine Abdichtung des Generators zum Generatorträger erzielen läßt.

Weitere Merkmale und Vorteile der Erfindung ergeben sich aus der nachfolgenden Beschreibung zweier Ausführungsbeispiele in Verbindung mit den beigefügten Zeichnungen. In diesen zeigen:
- Figur 1 eine schematische perspektivische Ansicht einer erfindungsgemäßen Baugruppe gemäß einer ersten Ausführungsform; und
- Figur 2 eine schematische perspektivische Ansicht eines Generatorträgers für eine erfindungsgemäße Baugruppe gemäß einer zweiten Ausführungsform.

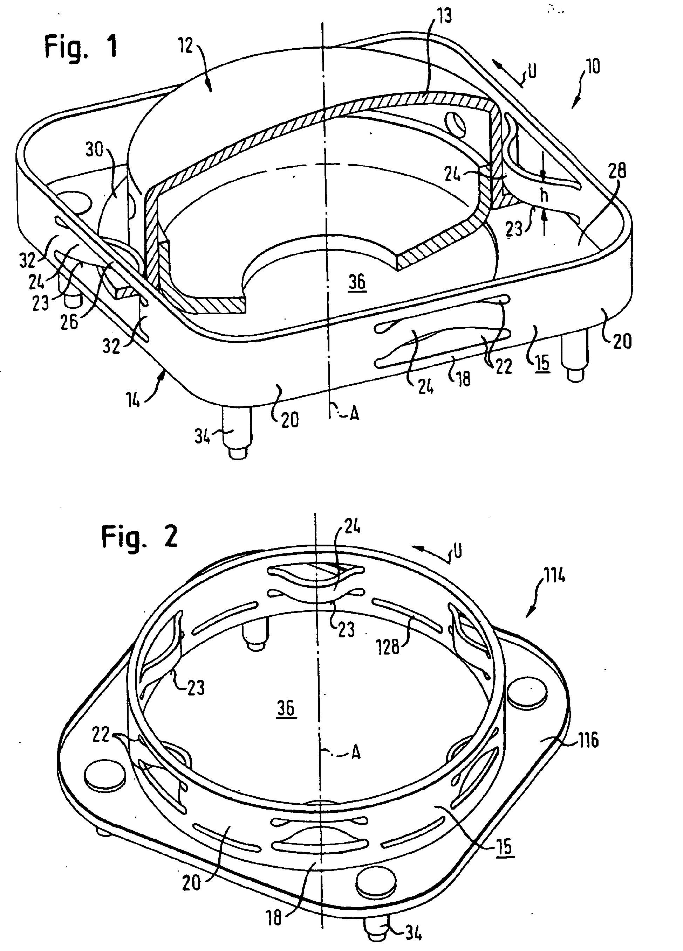

In Figur 1 ist eine Baugruppe 10 aus einem Gasgenerator 12 und einem Generatorträger 14 dargestellt. Der Gasgenerator 12 weist ein im wesentlichen zylinderförmiges Gehäuse 13 mit einem radialen Flansch 30 auf und ist in den Generatorträger 14 so eingesetzt, daß die Mittelachsen A der beiden Bauteile zusammenfallen.

Der Generatorträger 14 weist eine zylindrische, umfangsseitig geschlossene Umfangswand 15 auf, die eine quadratische Fläche einschließt und den Generatorträger 14 randseitig umgibt. Die Mittelachse des entsprechenden Zylinders fällt mit der Mittelachse A des Gasgenerators 12 zusammen. Die Umfangswand 15 setzt sich aus ersten und zweiten Wandabschnitten 18, 20 zusammen. Die ersten und zweiten Wandabschnitte 18, 20 sind in Umfangsrichtung U, d.h. entlang der Umfangswand 15, abwechselnd angeordnet. In den ersten Wandabschnitten 18 sind jeweils zwei in Umfangsrichtung U parallel zueinander verlaufende, übereinander angeordnete Schlitze 22 vorgesehen. Die Schlitze 22 begrenzen die Längsseiten von Klemmfortsätzen 24, die seitlich nach innen in Richtung zur Mittelachse A hin verformt sind. Die Klemmfortsätze 24 sind durch streifenförmige Abschnitte der Umfangswand 15 gebildet. Die durch den unteren der beiden Schlitze 22 definierte Seite 23 jedes Klemmfortsatzes 24 bildet einen Anschlag für den mit dem Gasgenerator verbundenen Flansch 30.

Beide Schmalseiten 32 der Klemmfortsätze 24 gehen jeweils einstückig in zweite Wandabschnitte 20 über. Die Klemmfortsätze 24 weisen in Axialrichtung A des Generatorträgers, d.h. senkrecht zu ihrer Verformungsrichtung eine Ausdehnung h auf, die durch den Abstand der die Klemmfortsätze begrenzenden Schlitze 22 bestimmt ist. Die die streifenförmigen Klemmfortsätze 24 bildenden Wandbereiche sind radial nach innen gebogen, ohne ihre Ausrichtung in Axialrichtung A zu verändern, so daß sich die Klemmfortsätze 24 parallel zur Mittelachse A erstrecken. Diese Ausbildung der Klemmfortsätze 24 führt zu einer sehr hohen Stabilität in Axialrichtung A.

Im hier gezeigten Beispiel sind vier erste Wandabschnitte 18 mit Klemmfortsätzen 24 und vier zweite Wandabschnitte 20 ohne Klemmfortsätze vorgesehen. Natürlich ist auch die Verwendung einer anderen Anzahl und einer anderen Form von Klemmfortsätzen denkbar.

In Axialrichtung A oberhalb der Klemmfortsätze 24 sind die zweiten Wandabschnitte 20 jeweils über Brücken 26 miteinander verbunden, so daß der obere Rand der Umfangswand 15 einen geschlossenen Ring bildet.

Der Generatorträger 14 weist einen ringförmigen Flansch 28 auf, der nach außen von der Umfangswand 15 begrenzt ist und sich senkrecht zur Mittelachse A erstreckt. Auf dem Flansch 28 kann der ringförmige Flansch 30, der den Gasgenerator 12 radial vollständig umgibt, vollflächig und auf dem Umfang durchgehend aufliegen.

Die Baugruppe ist sehr einfach zu montieren, indem der Gasgenerator 12 so in den Generatorträger 14 eingelegt wird, daß die radialen Flansche 28, 30 aufeinanderliegen und anschließend die Klemmfortsätze 24 radial in Richtung Mittelachse A hin verformt werden, so daß die durch die Seiten 23 der Klemmfortsätze gebildeten Anschläge den Flansch 30 erfassen und den Gasgenerator 12 am Generatorträger 14 fixieren. Durch die Befestigung des Gasgenerators 12 über die seitlich verformten Klemmfortsätze 24 kann ein Klappern des Gasgenerators 12 im Generatorträger 14 weitgehend vermieden werden.

Der Gasgenerator 12 kann durch das Zurückbiegen der Klemmfortsätze 24 auf einfache Weise aus dem Generatorträger 14 entfernt werden.

Das Aufeinanderliegen der Flansche 28, 30 sorgt bereits für eine gewisse Gasdichtigkeit, es kann aber zwischen den radialen Flanschen 28, 30 noch eine zusätzliche (nicht gezeigte) Dichtung eingefügt sein.

Im hier gezeigten Beispiel ist der Generatorträger 14 gleichzeitig als Gassackhalteelement ausgebildet, so daß der Generatorträger 14 mitsamt dem daran befestigten Gasgenerator 12 in einen (nicht gezeigten) Gassack eingesetzt werden kann. Am Generatorträger sind sich in Axialrichtung A erstreckende Bolzen 34 angeordnet, die gleichzeitig zur Befestigung des Gassacks am Generatorträger 14 sowie des Generatorträgers 14 an einem Modulgehäuse oder an einem Fahrzeug dienen.

In Figur 2 ist ein Generatorträger 114 gemäß einer zweiten Ausführungsform gezeigt. Im Unterschied zum Generatorträger 14 der ersten Ausführungsform ist die Umfangswand 15 als kreiszylindrischer Ring gestaltet, der eine zentrale Öffnung umgibt. Erste Wandabschnitte 18 mit Klemmfortsätzen 24 wechseln auch hier mit zweiten Wandabschnitten 20 ohne Klemmfortsätze 24 ab. In diesem Fall sind sechs Klemmfortsätze 24 vorgesehen. Von den Wandabschnitten nach außen erstreckt sich eine im wesentlichen flache Bodenplatte 116, die dem Generatorträger 114 einen im wesentlichen quadratischen Außenumfang verleiht.

Der Gasgenerator 12 wird in dieser Ausführungsform nicht auf einem ringförmigen Flansch 28 sondern auf an den zweiten Wandabschnitten 20 ausgebildeten Vorsprüngen 128 aufgelegt.

Der Zusammenbau der Baugruppe erfolgt wie oben beschrieben.

Auch der Generatorträger 114 ist gleichzeitig als Gassackhalteelement ausgebildet. Die Bolzen 34 sind an der Bodenplatte 116 befestigt.

## Patentansprüche

1. Baugruppe aus einem Gasgenerator (12) mit einem Flansch (30) und einem Generatorträger (14;114), an dem der Flansch (30) befestigt ist,
wobei der Generatorträger (14; 114) eine den Gasgenerator (12) umfangsmäßig wenigstens abschnittsweise umgebende, vorzugsweise zylindrische Umfangswand (15) hat,
und in der Umfangswand (15) wenigstens ein durch abschnittsweises seitliches Verformen gebildeter Klemmfortsatz (24) vorgesehen ist,
wobei der Klemmfortsatz (24) durch wenigstens einen im wesentlichen in Umfangsrichtung (U) verlaufenden Schlitz (22) in der Umfangswand (15) begrenzt ist und die durch den Schlitz (22) definierte Seite des Klemmfortsatzes (24) einen Anschlag für den Flansch (30) bildet,
**dadurch gekennzeichnet, daß** der Klemmfortsatz (24) durch zwei im wesentlichen zueinander parallel verlaufende, sich in Umfangsrichtung (U) erstreckende Schlitze (22) begrenzt ist.

2. Baugruppe nach Anspruch 1, **dadurch gekennzeichnet, daß** sich die Umfangswand (15) in Umfangsrichtung (U) aus abwechselnden ersten Wandabschnitten (18) mit Klemmfortsätzen (24) und zweiten Wandabschnitte (20) ohne Klemmfortsätze (24) zusammensetzt.

3. Baugruppe nach Anspruch 2, **dadurch gekennzeichnet, daß** die Klemmfortsätze (24) streifenförmige Abschnitte der Umfangswand (15) sind, deren entgegengesetzte Schmalseiten (32) einstückig in zweite Wandabschnitte (20) übergehen.

4. Baugruppe nach Anspruch 3, **dadurch gekennzeichnet, daß** sich die streifenförmigen Abschnitte parallel zu einer Mittelachse (A) des Generatorträgers (14; 114) erstrecken.

5. Baugruppe nach einem der Ansprüche 2 bis 4, **dadurch gekennzeichnet, daß** die ersten Wandabschnitte (18) von den Klemmfortsätzen (24) separate Brücken (26) aufweisen, die jeweils zwei nebeneinanderliegende zweite Wandabschnitte (20) verbinden.

6. Baugruppe nach einem der vorhergehenden Ansprüche, **dadurch gekennzeichnet, daß** der Flansch (30) den Gasgenerator (12) umfangsmäßig vollständig umgibt.

7. Baugruppe nach einem der vorhergehenden Ansprüche, **dadurch gekennzeichnet, daß** der Generatorträger (14) einen radialen Flansch (28) aufweist, auf dem der Flansch (30) des Gasgenerators (12) im montierten Zustand der Baugruppe (10) aufliegt.

8. Baugruppe nach Anspruch 6 und 7, **dadurch gekennzeichnet, daß** der Flansch (30) des Gasgenerators (12) längs des Umfangs durchgehend auf dem Flansch (28) des Generatorträgers (14) aufliegt.

## Claims

1. An assembly of a gas generator (12) with a flange (30) and a generator holder (14; 114), to which the flange (30) is fastened,
the generator holder (14; 114) having a preferably cylindrical peripheral wall (15) at least partially surrounding the gas generator (12) peripherally,
and at least one clamping extension (24) formed by partial lateral deformation being provided in the peripheral wall (15),
the clamping extension (24) being delimited by at least one slit (22) in the peripheral wall (15), the slit running substantially in the peripheral direction (U), and the side of the clamping extension (24) defined by the slit (22) forming a stop for the flange (30),
**characterized in that** the clamping extension (24) is delimited by two slits (22) which run substantially parallel to each other and extend in the peripheral direction (U).

2. The assembly according to claim 1, **characterized in that** the peripheral wall (15) is composed in the peripheral direction (U) of alternating first wall sections (18) with clamping extensions (24) and second wall sections (20) without clamping extensions (24).

3. The assembly according to Claim 2, **characterized in that** the clamping extensions (24) are strip-shaped sections of the peripheral wall (15), the opposite narrow sides (32) of which continue in one piece into second wall sections (20).

4. The assembly according to Claim 3, **characterized in that** the strip-shaped sections extend parallel to a central axis (A) of the generator holder (14; 114).

5. The assembly according to any of Claims 2 to 4, **characterized in that** the first wall sections (18) have bridges (26) which are separate from the clamping extensions (24) and which each connect two adjacent second wall sections (20).

6. The assembly according to any of the preceding claims, **characterized in that** the flange (30) completely surrounds the gas generator (12) peripherally.

7. The assembly according to any of the preceding claims, **characterized in that** the generator holder (14) has a radial flange (28) on which the flange (30) of the gas generator (12) rests in the installed state of the assembly (10).

8. The assembly according to Claims 6 and 7, **characterized in that** the flange (30) of the gas generator (12) rests along the periphery continuously on the flange (28) of the generator holder (14).

## Revendications

1. Ensemble constitué par un générateur de gaz (12) comportant une bride (30) et par un support de générateur (14 ; 114), sur lequel la bride (30) est fixée,
le support de générateur (14 ; 114) ayant une paroi périphérique (15) de préférence cylindrique entourant au moins par sections le générateur de gaz (12) sur la périphérie,
et dans la paroi périphérique (15) étant prévu au moins un appendice de serrage (24) formé par déformation latérale par sections,
l'appendice de serrage (24) étant délimité par au moins une fente (22) s'étendant sensiblement en direction périphérique (U) dans la paroi périphérique (15), et le côté défini par la fente (22), de l'appendice de serrage (24), formant une butée pour la bride (30),
**caractérisé en ce que** l'appendice de serrage (24) est délimité par deux fentes (22) sensiblement parallèles l'une à l'autre et s'étendant en direction périphérique (U).

2. Ensemble selon la revendication 1, **caractérisé en ce qu'**en direction périphérique (U), la paroi périphérique (15) est constituée en alternance par des premiers tronçons de paroi (18) avec appendices de serrage (24) et par des seconds tronçons de paroi (20) sans appendice de serrage (24).

3. Ensemble selon la revendication 2, **caractérisé en ce que** les appendices de serrage (24) sont des tronçons en forme de bandes de la paroi périphérique (15), dont les petits côtés (32) opposés se transforment d'un seul tenant en des seconds tronçons de paroi (20).

4. Ensemble selon la revendication 3, **caractérisé en ce que** les tronçons en forme de bandes s'étendent parallèlement à un axe médian (A) du support de générateur (14 ; 114).

5. Ensemble selon l'une des revendications 2 à 4, **caractérisé en ce que** les premiers tronçons de paroi (18) présentent des ponts (26) séparés provenant des appendices de serrage (24), lesquels relient chacun deux tronçons de paroi (20) situés l'un à côté de l'autre.

6. Ensemble selon l'une des revendications précédentes, **caractérisé en ce que** la bride (30) entoure entièrement le générateur de gaz (12) sur la périphérie.

7. Ensemble selon l'une des revendications précédentes, **caractérisé en ce que** le support de générateur (14) présente une bride (28) radiale sur lequel la bride (30) du générateur de gaz (12) est en appui à l'état monté de l'ensemble (10).

8. Ensemble selon les revendications 6 et 7, **caractérisé en ce que** la bride (30) du générateur de gaz (12) est en appui sur la bride (28) du support de générateur (14), de manière continue le long de la périphérie.
